# Europäisches Patentamt
## European Patent Office
### Office européen des brevets

(19)

(11) Publication number : **0 248 773 B1**

(12) **EUROPEAN PATENT SPECIFICATION**

(45) Date of publication of patent specification :
06.03.91 Bulletin 91/10

(51) Int. Cl.⁵ : **B60N 2/12, B60N 2/02**

(21) Application number : **87830210.8**

(22) Date of filing : **01.06.87**

(54) Adjustable seat for a vehicle.

(30) Priority : **06.06.86 IT 5350786 U**

(43) Date of publication of application :
**09.12.87 Bulletin 87/50**

(45) Publication of the grant of the patent :
**06.03.91 Bulletin 91/10**

(84) Designated Contracting States :
**DE ES FR GB SE**

(56) References cited :
GB-A- 2 136 086
US-A- 2 583 349
US-A- 2 600 886
US-A- 3 295 889
US-A- 3 879 007

(73) Proprietor : **FIAT AUTO S.p.A.**
Corso Giovanni Agnelli 200
I-10135 Torino (IT)

(72) Inventor : **Acuto, Giovanni**
Via Di Nanni 16/5
I-10043 Orbassano Torino (IT)
Inventor : **Sbaragli, Silvano**
Via Europa 15
I-10048 Vinovo Torino (IT)

(74) Representative : **Bosotti, Luciano et al**
c/o Jacobacci-Casetta & Perani S.p.A. Via
Alfieri, 17
I-10121 Torino (IT)

EP 0 248 773 B1

**Description**

The present invention relates to adjustable seats for motor vehicles and relates particularly to an adjustable seat for mounting on the floor of the passenger compartment of a motor vehicle, comprising a cushion with a front region and a rear region, a back projecting from the rear region of the cushion and support means which, during adjustment of the seat longitudinally of the passenger compartment of the vehicle, impart separate movements to the cushion and the back rest such that, during adjustment forwardly of the passenger compartment of the vehicle, the free length of the cushion is reduced and the cushion is moved so as to cause the raising of the rear region of the cushion itself.

Adjustable seats of similar type are described for example in EP-A-0232687, EP-A-0232685, (both cited under Art. 54 (3) EPC), and in EP-A-0 205 409, all in the name of the same Applicant. A somewhat similar arrangement, even though not providing for variation of the free length of the cushion, is disclosed in US-A-2 600 886.

A seat corresponding to the preambule of claim 1 is known e.g. form IT-U-206418.

The subject of the present invention is an improvement in such a seat, intended to facilitate the adjustment by the user and to reduce the overall vertical bulk of the seat.

This is achieved by the features of claim 1.

According to the invention, this improvement results from the fact that, in a seat or the aforesaid type, adjacent the front region of the cushion there are provided, in combination, straight guide means which can be mounted on the floor of the passenger compartment in an approximately horizontal position and at least one slide member slidable along the guide means and fixed to the front region of the cushion so as to be pivotable about an axis which is generally horizontal in the assembled position of the seat, so as to impart to the front region of the cushion a substantially straight line movement during the said adjustment.

Further characteristics and advantages of the invention will become apparent from the description which follows, given purely by way of non-limiting example, with reference to the appended drawings in which :

Figures 1 and 2 illustrate schematically, in side elevation, an adjustable seat according to the invention in two possible positions of use, and

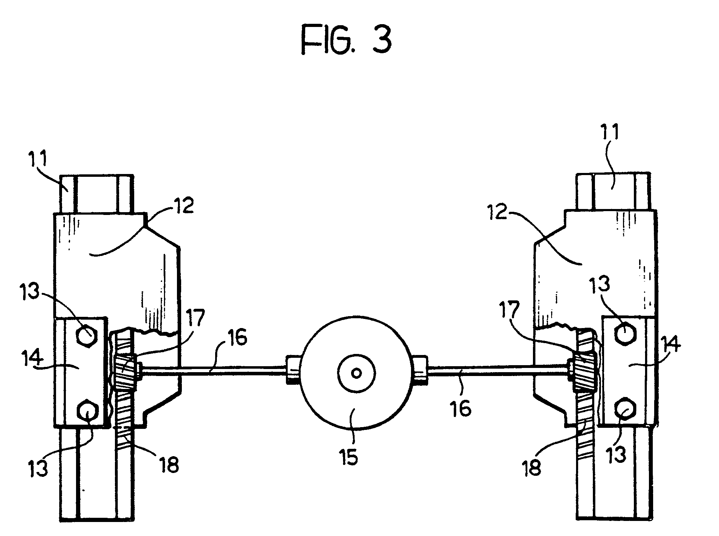

Figure 3 is a partial view taken on the arrow III of Figure 1.

In the drawings, an adjustable motor vehicle seat such as for example the seat for the driver of a motor car, is generally indicated 1.

Of this vehicle, which is not illustrated in its entirety, only that portion of the floor P of the passenger compartment on which the seat 1 is mounted is illustrated schematically.

The seat 1 can be seen to include a back 2 having a head rest 3 at its upper end and an approximately horizontal member 4 which defines the seating plane of the seat and which, in the present description and the following claims, is termed the "cushion" for brevity.

The seat 1 according to the invention is an adjustable seat, that is to say a seat which may be given an overall translational movement in a longitudinal direction relative to the passenger compartment of the motor vehicle in order to adapt the position of the seat 1 itself to the anthropometric characteristics or driving and travelling habits of the driver or passenger occupying it.

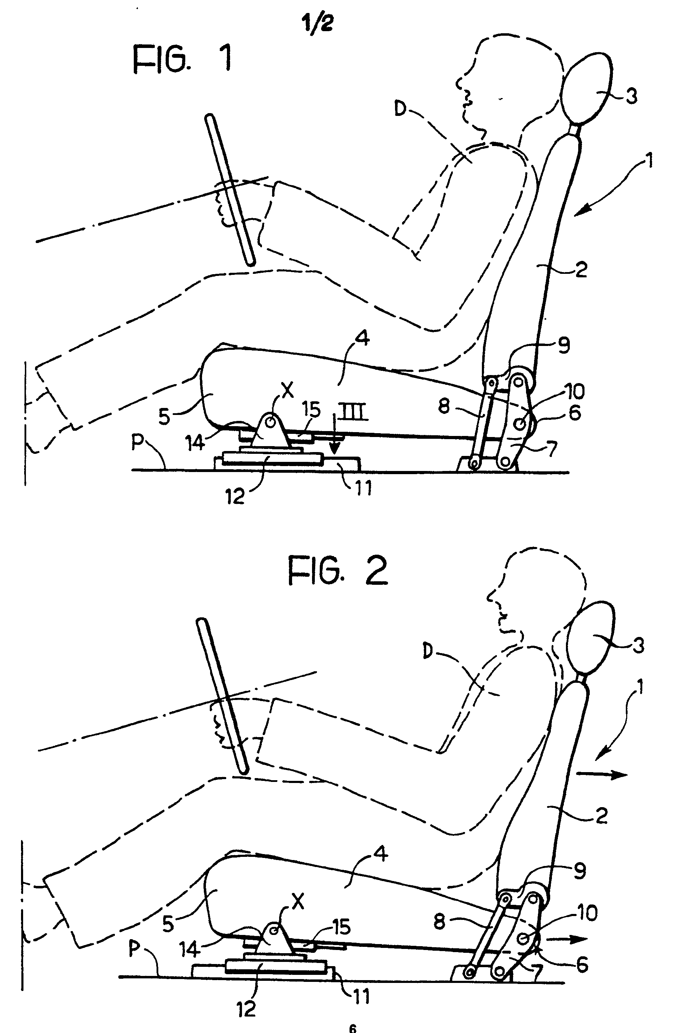

More particularly, the adjustment of the seat 1 is effected between a most forward position and a most rearward position corresponding substantially to the positions illustrated in Figures 1 and 2.

The positions of adjustment close to the most forward position are intended to be used by short drivers or passengers. On the other hand the positions of adjustment close to the most rearward position are used by tall drivers or passengers.

In Figures 1 and 2 the profile of two drivers or passengers, short and tall respectively, are illustrated schematically in broken outline and indicated D.

The cushion 4 can be seen to include a front region 5 and a rear region 6 from which the back 2 projects approximately vertically.

Two pivotable arms located in correspondence with the rear region 6 of the cushion 4 are indicated 7 and 8.

It should be specified that in Figures 1 and 2 only the pivotable arms 7 and 8 disposed on one of the sides (specifically the left-hand side) of the seat are visible. A similar arrangement of arms is provided on the other side.

Both the arms 7 and 8 have lower points of hingeing to the floor P of the passenger compartment and upper points of hingeing to a plate 9 fixed firmly to the back 2 at the lower end of the back 2 itself.

The arm 7, which is generally angled, also has an intermediate hinge point indicated 10 at the rear region 6 of the cushion.

The length of the front arm 8 may be made selectively adjustable.

The configuration of arms described means that during the adjustment of the seat 1 longitudinally of the floor of the passenger compartment, the cushion 4 and the back 2 have separate paths of movement. More particularly, the length of the longitudinal movement imparted to the cushion 4 is a fraction (about half) the length of the corresponding movement effected by the back 2. This means that during the adjusting movement forward of the floor P of the passenger compartment, the free length of the cushion is reduced and the cushion 4 itself is subjected to a forward rotational movement which causes the raising of the rear region 6. On the other hand during the adjusting movement in the opposite direction, that is rearwardly of the passenger compartment, the free length of the cushion increases and the cushion is subjected to a rearward rotational movement which causes the lower of the rear region 6.

The joint adjustment of the position and orientation of the back 2 of the cushion 4 thus achieved enables the seat 1 to be better adapted to the anthropometric characteristics of the person occupying it.

For a more detailed description of the criteria regulating the operation of the pivotable arms 7 and 8 and for the overall adjustment of the seat caused thereby, reference is made to the description of EP-A-0 232 687 in the name of the same Applicants, already cited above.

Two straight guides (one for each side of the seat) are indicated 11 and are fixed side by side to the floor P of the passenger compartment in an approximately horizontal position adjacent the front region 5 of the cushion 4. For this purpose it should be specified that the term "front region", as also used in the present description and in the following claims, does not indicate exclusively the part of the cushion 4 which is immediately adjacent its front edge, but extends to all that part of the cushion 4 between this edge and the middle region of the cushion 4.

A slide member 12 is slidable on each guide 11 and a support 14 which extends upwardly towards the lower surface of the cushion 4 is secured in its turn on each slide element 12 for example by bolts 13.

At its upper end each support 14 is fixed to the front region 5 of the cushion 4.

More precisely, each support 14 is hingeably connected to one side of the cushion 4 so that the latter is pivotable about an axis X which, in the assembled position of the seat 1 in a motor car, is substantially horizontal.

The arrangement described is thus such that, during adjustment of the seat 1 longitudinally of the motor car, the front end 5 of the cushion 4 follows a substantially straight, horizontal translational path.

At the same time, the cushion 4 can rotate or tip slightly about the axis X, this movement being induced by the raising and lowering of the rear region 6 effected by the arm 7 (or more precisely by the two arms 7 provided on the two sides of the seat 1). As indicated above, each of these arms 7 is hinged at its lower end to the floor P and is connected at its middle 10 to the rear region 6 of the cushion.

The longitudinal adjustment of the seat 1 thus causes pivoting of the arm 7 about its lower hinge point ; as a result of this pivoting, the middle region 10 of the arm 7 itself and hence the rear region 6 of cushion 5 follow an arcuate path with a consequent variation in the distance (height) of the rear region 6 of the cushion 4 from the plane of the floor P.

The longitudinal translational movement of the seat 1 may be effected directly by the person occupying the seat with a mechanical adjustment action entirely similar to that which is carried out to adjust the longitudinal position of most seats in current production.

According to a particularly advantageous development of the invention, this adjustment may be motorised.

For this purpose a motor element is provided in the seat according to the invention which enables the sliding of the slide members 12 on the guides 11 to be driven positively.

In one possible embodiment, illustrated here without any limiting character, an electric or fluid motor 15 is mounted on a fixed support in the front region 5 of the cushion 4 and projects below the cushion 4 itself. The motor 15 which is thus fixed rigidly to the cushion 4 is movable with the cushion 4 itself and rotates two shafts, for example two prismatic shafts 16. The shafts 16 rotate a gear 17 acting on corresponding toothing 18 in the respective guide 11 or at least rigid-with it.

The gear 17, 18 may be constituted, for example, by a simple rack and pinion gear. Alternatively it is possible to use different types of gears, for example a gear including a helical wheel cooperating with inclined teeth provided in the guides 11.

In each case, the effect of operating the motor 15 is to cause translational movement of the-slide elements 12 along the guides 11.

The translational movement of the slide elements 12 is transmitted through the support 14 to the cushion 4 which in its turn transmits the movement to the back 2 through the pivotal arm 7 .

The actuation of the motor 15 in the two senses may be controlled selectively by contol devices of kown type not illustrated here.

More particularly, it is possible to connect an auxiliary transmission to the motor 15 to drive the orientation of the back 2 according to the solution illustrated in EP-A-0 232 685 in the name of the same Applicant.

## Claims

1. Adjustable seat (1) for mounting on the floor (P) of the passenger compartment of a motor vehicle, comprising a cushion (4) with a front region (5) and a rear region (6), a back (2) projecting from the rear region (6) of the cushion (4) and support means (7, 8, 11 and 14) which, during adjustment of the seat (1) longitudinally relative to the passenger compartment of the vehicle, impart separate movements to the cushion (4) and the back (2) such that, during adjustment forwardly in the passenger compartment of the vehicle, the free length of the cushion (4) is reduced and the cushion (4) is subject to a movement which causes the raising of the rear region (6) of the cushion itself, said seat further comprising, straight guide means (11) mounted on the floor (P) of the passenger compartment and at least one slide member (12) slidable along the guide means (11), the cushion (4) being pivotable about an axis (X) which is generally horizontal in the assembled position of the seat (1), characterised in that, the guide means (11) is arranged adjacent the front region (5) of the cushion (4) in an approximately horizontal position, said slide member (12) being pivotably fixed to the front region (5) of the cushion (4) via said pivot axis (X), so as to impart to the front region (5) of the cushion (4) a substantially straight line path of movement during said adjustment.

2. Seat according to Claim 1, characterised in that there are provided two straight guides (11) which can be mounted on the floor (P) of the passenger compartment in approximately horizontal positions alongside each other, and two slide members (12) each of which is slidable along a respective one of the straight guides (11) ; the two slide members (12) being fixed (13, 14) to the front region (5) of the seat (4) so that the seat is pivotable about the said generally-horizontally axis (X).

3. Seat according to Claim 1 or Claim 2, characterised in that a motor unit (15) is provided which can drive the sliding of the at least one slide member (12) positively along the straight guide means (11).

4. Seat according to Claim 3, characterised in that the motor unit (15) is fixed rigidly to the cushion (4) so as to be movable with the cushion (4) itself.

## Ansprüche

1. Verstellbarer Sitz (1) zur Anbringung auf dem Boden (P) der Fahrgastzelle eines Kraftfahrzeuges, umfassend ein Sitzpolster (4) mit einem vorderen Bereich (5) und einem hinteren Bereich (6), eine Rückenlehne (2), die sich von dem hinteren Bereich (6) des Sitzpolsters (4) aus erstreckt, und Tragmittel (7, 8, 11 und 14), welche während der Längsverstellung des Sitzes (1) relative zu der Fahrgastzelle des Kraftfahrzeuges dem Sitzpolster (4) und der Rückenlehne (2) getrennte Bewegungen verleihen, so daß während der Verstellung nach vorne in der Fahrgastzelle des Kraftfahrzeuges die freie Länge des Sitzpolsters (4) verringert wird und das Sitzpolster (4) einer Bewegung ausgesetzt ist, welche ein Anheben des hinteren Bereiches (6) des Sitzes bewirkt, dieser Sitz weiterhin umfassend, Längsführungsmittel (11), die auf dem Boden (P) der Fahrgastzelle angebracht sind, und wenigstens ein entlang der Längsführungsmittel (11) verschiebbares Gleitelement (12), wobei das Sitzpolster (4) um eine Achse (X) schwenkbar ist, welche in der montierten Position des Sitzes (I) im wesentlichen horizontal verläuft, **dadurch gekennzeichnet,** daß die Längsführungsmittel (11) in der nähe des vorderen Bereiches (5) des Sitzpolsters (4) in einer angenähert horizontalen Stellung angeordnet sind, wobei das Gleitelement (12) über die Drehachse (X) drehbar an dem vorderen Bereich (5) des Sitzpolsters (4) angebracht ist, um dem vorderen Bereich (5) des Sitzpolsters (4) einen im wesentlichen geradlinigen Bewegungsweg während der Verstellung zu verleihen.

2. Sitz nach Anspruch 1, **dadurch gekennzeichnet,** daß zwei Längsführungen (11) vorgesehen sind, welche auf dem Boden (P) der Fahrgastzelle in im wesentlichen horizontaler Stellung nebeneinander angebracht werden können, und daß zwei Gleitelemente (12) vorgesehen sind, von denen jedes entlang jeweils einer Längsführung (11) verschiebbar ist, wobei die beiden Gleitelemente (12) an dem vorderen Bereich (5) des Sitzes (4) angebracht (13, 14) sind, so daß der sitz drehbar um die im wesentlichen horizontale Achse (X) ist.

3. Sitz nach einem der Ansprüche 1 oder 2, **dadurch gekennzeichnet,** daß eine Motoreinheit (15) vorgesehen ist, welche das Gleiten des wenigstens einen Gleitelements (12) genau entlang der Längsführungsmittel (11) antreiben kann.

4. Sitz nach Anspruch 3, **dadurch gekennzeichnet,** daß die Motoreinheit (15) fest an dem Sitzpolster (4) angebracht ist, um mit dem Sitzpolster (4) bewegt zu werden.

## Revendications

1. Siège réglable (1) destiné à être monté sur le plancher (P) du compartiment des passagers d'un véhicule à moteur, comprenant une assise (4) ayant une région avant (5) et une région arrière (6), un dossier (2) dépassant de la région arrière (6) de l'assise (4) et un dispositif de support (7, 8, 11 et 14) qui, pendant le réglage du siège (1) longitudinalement par rapport au compartiment des passagers du véhicule, assure des mouvements séparés de l'assise (4) et du dossier (2) afin que, pendant le réglage vers l'avant dans le compartiment des passagers du véhicule, la longueur libre de l'assise (4) soit réduite et l'assise (4) soit soumise à un mouvement qui provoque le soulèvement de la région arrière (6) de l'assise elle-même, le siège comprenant en outre un dispositif rectiligne de guidage (11) monté sur le plancher (P) du compartiment des passagers et au moins un organe coulissant (12) qui peut coulisser le long du dispositif de guidage (11), l'assise (4) pouvant pivoter autour d'un axe (X) qui est horizontal de façon générale dans la position montée du siège (1), caractérisé en ce que le dispositif de guidage (11) est disposé près de la région avant (5) de l'assise (4) en position approximativement horizontale, l'organe coulissant (12) étant fixé à la région avant (5) de l'assise (4) par l'intermédiaire de l'axe de pivotement (X) afin qu'il puisse pivoter, si bien que la région avant (5) de l'assise (4) a un trajet pratiquement rectiligne de déplacement pendant le réglage.

2. Siège selon la revendication 1, caractérisé en ce que deux guides rectilignes (11) sont présents et peuvent être montés sur le plancher (P) du compartiment des passagers en position approximativement horizontale le long l'un de l'autre, et deux organes coulissants (12) qui peuvent coulisser chacun le long d'un guide rectiligne respectif (11), les deux organes coulissants (12) étant fixés (13, 14) à la région avant (5) du siège (4), si bien que le siège peut pivoter autour de l'axe (X) horizontal de façon générale.

3. Siège selon la revendication 1 ou la revendication 2, caractérisé en ce qu'un ensemble à moteur (15) est disposé et permet la commande du coulissement d'au moins un organe coulissant (12) positivement le long du dispositif rectiligne de guidage (11).

4. Siège selon la revendication 3, caractérisé en ce que l'ensemble à moteur (15) est fixé rigidement à l'assise (4) afin qu'il soit mobile avec l'assise elle-même (4).

FIG. 1

FIG. 2

## FIG. 3